# EUROPEAN PATENT APPLICATION

(11) **EP 3 808 184 A1**
(43) Date of publication of application: **21.04.2021**
(21) Application number: 19204043.4
(22) Date of filing: 18.10.2019
(51) Int. Cl.: A23F 3/18, B65D 85/808

(54) **DECORATIVE SHAPED INFUSER AND MANUFACTURING METHODS OF THE SAME**

(71) Applicant: Lin, Ming Hwang, Taoyuan City 337 (TW)
(72) Inventor: Lin, Ming Hwang, Taoyuan City 337 (TW)
(74) Representative: Viering, Jentschura & Partner mbB Patent- und Rechtsanwälte

(57) **Abstract**

A decorative shaped infuser comprising a shaped shell having a first shell portion comprising a first shell opening and a second shell portion comprising a second shell opening is provided. The first shell opening is assembled to the second shell opening defining a chamber. The chamber includes at least one consumable plant-based material, completely infusing and diffusing after being immersed in a consumable liquid. The first shell portion comprises at least one first attachment assembled thereto. The second shell portion comprises at least one moveable second attachment assembled thereto. A thickness of at least a portion of the at least one moveable second attachment is less than an average thickness of the shaped shell, whereby after being immersed in a consumable liquid, the at least a portion of the at least one moveable second attachment moves with liquid turbulence.

## Description

### TECHNICAL FIELD

Example embodiments relate generally to the field of thermoforming and, more particularly, to thermoformed decorative shaped infusers and manufacturing methods of the same.

### BACKGROUND

The history of tea is deeply rooted in ancient China. In the beginning, people often used a container for holding hot water therein, and then soaked tea leaves in the hot water for drinking tea. As popularity grew, tea connoisseurs focused their attention on the different types of tea leaves, ways of preparing the tea leaves, material and design of teapots and water quality, to develop more pleasurable and refreshing tastes.

Today, tea is not only popular in China; it is also popular in many other parts of the world. The previous ways of preparing and drinking tea using a container for holding hot water and then soaking tea leaves therein, has given way to the more convenient, tea bag, where less preparation and time is needed for drinking tea. Tea bags are small, porous bags used to steep tea. Some tea bag types include the filter paper tea bags, rectangular style tea bags, and round style tea bags. While the tea bags can be convenient and less time-consuming, however, at times, pleasurable and refreshing aroma, appearance and tastes are sacrificed.

To begin, there is a limited amount of space for tea leaves to unfurl during the steeping process when tea bags are used. Thus, most of the flavor and nutrients of whole-leaf tea leaves may not be released during the steeping process. If broken-leaf tea leaves are used for quick and full infusion, often they are inferior in taste when compared to their whole-leaf form. Also, for filter paper tea bags, they are often bleached and any metal related to tea bags or the tea steeping process can also influence the tea taste.

Meanwhile, the more elaborate a tea bag's shape is, the more processing steps and costs are often required.

### SUMMARY

Decorative shaped infusers and manufacturing methods of the same are provided.

In some embodiments, a decorative shaped infuser comprising a shaped shell, made from a nonwoven porous plastic material, having a first shell portion comprising a first shell opening and a second shell portion comprising a second shell opening is provided. The first shell opening is assembled to the second shell opening defining a chamber within the shaped shell. The chamber includes at least one consumable plant-based material and the at least one consumable plant-based material completely infuses and diffuses after being immersed in a consumable liquid.

In some embodiments, the first shell portion comprises a first contact area having an inner step portion and a first outer edge and the second shell portion comprises a second contact area having an inner ledge portion and a second outer edge. When assembled, the inner step portion contacts and aligns flush with the inner ledge portion and the first outer edge contacts and aligns flush with the second outer edge.

In some embodiments, the first shell portion comprises at least one first attachment assembled thereto via thermocompression melt cutting, ultrasonic melt cutting, high-frequency plastic melt cutting, or snap fit attachment. The at least one first attachment is made of nonwoven porous plastic material and comprises a first attachment area and a first free area opposite the first attachment area. The first attachment area contacts the first shell portion.

In some embodiments, the second shell portion comprises at least one moveable second attachment assembled thereto via thermocompression melt cutting, ultrasonic melt cutting, high-frequency plastic melt cutting, or snap fit attachment. The at least one moveable second attachment is made of nonwoven porous plastic material and comprises a second attachment area and second free area opposite the second attachment area. The second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence.

In some embodiments, the at least one consumable plant-based material is made of loose whole-leaf tea leaves, whereby the loose whole-leaf tea leaves completely infuse via non-hindered unfurling thereof after being immersed in a consumable liquid. In some embodiments, the at least one consumable plant-based material is made of a fruit, or herb, coffee grinds, or any combination thereof.

In some embodiments, the weight of the shaped shell made from the nonwoven porous plastic material is between 50 to 300 grams per square meter.

In some embodiments, the nonwoven porous plastic material is made of polyvinyl chloride (PVC), polyethylene terephthalate (PET), polypropylene (PP), polystyrene (PS), or polylactic acid (PLA).

In some embodiments, the shape of the decorative shaped infuser is a fish. In some embodiments, the shape of the decorative shaped infuser is a 3D geometric shape, an animal, a person, a 3D place, or a thing, or combinations thereof.

In some embodiments, a method for making a decorative shaped infuser comprising a shaped shell, made from a nonwoven porous plastic material, having a first shell portion comprising a first shell opening and a second shell portion comprising a second shell opening is provided. The method comprises the steps of, Step (210): providing a thermoforming machine, a plurality of decorative shaped infuser molds for assembly with the thermoforming machine and forming a plurality of shaped shells of the decorative shaped infuser, each having a first shell portion comprising a first shell opening and a second shell portion comprising a second shell opening, whereby a chamber is defined within each plurality of shaped shells, nonwoven porous plastic material, and a plurality of at least one consumable plant-based material. Following, Step (220): positioning the nonwoven porous plastic material within the thermoforming machine for thermoforming each of the plurality of first shell portions and second shell portions of the plurality of shaped shells. Next, Step (230): thermoforming each of the plurality of first shell portions and second shell portions and Step (240): removing each of the plurality of first shell portions and second shell portions from the thermoforming machine. Also, Step (250): assembling the plurality of at least one consumable plant-based material within each of the plurality of first shell portions and second shell portions and Step (260): cutting and forming each of the plurality of first shell portions and second shell portions into individual pieces. Additionally, Step (270): assembling each of the plurality of first shell portions and second shell portions having the at least one consumable plant-based material therein together via thermocompression melt cutting, ultrasonic melt cutting, or high-frequency plastic melt cutting.

In some embodiments of the method for making the decorative shaped infuser, the first shell portion comprises a first contact area having an inner step portion and a first outer edge and the second shell portion comprises a second contact area having an inner ledge portion and a second outer edge, whereby when assembled, the inner step portion contacts and aligns flush with the inner ledge portion, and the first outer edge contacts and aligns flush with the second outer edge.

In some embodiments, the method for making the decorative shaped infuser further comprises the steps of, Step (280): determining whether: S1: the first shell portion comprises at least one first attachment to be assembled thereto; or S1 & S2: both the first shell portion comprises at least one first attachment to be assembled thereto and the second shell portion comprises at least one moveable second attachment to be assembled thereto; or S2: the second shell portion comprises at least one moveable second attachment to be assembled thereto. If S1, performing Step (290A), if no, ending the method, or if S1 & S2, performing Step (290B), if no, ending the method, or if S3, performing Step (290C), if no, ending the method. Step (290A) comprises: determining whether assembly of the at least one first attachment to the first shell portion is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300A), if no, via snap fit attachment, performing Step (305B). Step (290B) comprises: determining whether assembly of the at least one first attachment to the first shell portion is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300A) and Step (300C), if no, via snap fit attachment, performing Step (305A) and Step (300C). Step (290C) comprises: determining whether assembly of the at least one moveable second attachment to the second shell portion is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300C), if no, via snap fit attachment, performing Step (305C). Step (300A) comprises: assembling the at least one first attachment to the first shell portion via thermocompression melt cutting, ultrasonic melt cutting, or high-frequency plastic melt cutting, wherein the at least one first attachment is made of nonwoven porous plastic material and comprises a first attachment area and a first free area opposite the first attachment area, the first attachment area contacts the first shell portion. Step (300B) comprises: assembling the at least one first attachment to the first shell portion and assembling the at least one moveable second attachment to the second shell portion via thermocompression melt cutting, ultrasonic melt cutting, or high-frequency plastic melt cutting, wherein the at least one first attachment is made of nonwoven porous plastic material and comprises a first attachment area and a first free area opposite the first attachment area, the first attachment area contacts the first shell portion and the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence. Step (300C) comprises: assembling the at least one moveable second attachment to the second shell portion via thermocompression melt cutting, ultrasonic melt cutting, or high-frequency plastic melt cutting, the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence. Step (305A) comprises: cutting and assembling the at least one first attachment to the first shell portion via snap fit attachment, wherein the at least one first attachment is made of nonwoven porous plastic material and comprises a first attachment area and a first free area opposite the first attachment area, the first attachment area contacts the first shell portion. Step (305C) comprises: cutting and assembling the at least one moveable second attachment to the second shell portion via snap fit attachment, the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence.

In some embodiments of the method for making the decorative shaped infuser, the at least one consumable plant-based material is made of loose whole-leaf tea leaves, whereby the loose whole-leaf tea leaves completely infuse via non-hindered unfurling thereof after being immersed in a consumable liquid. In some embodiments of the method for making the decorative shaped infuser, the at least one consumable plant-based material is made of a fruit, or herb, coffee grinds, or any combination thereof.

In some embodiments of the method for making the decorative shaped infuser, the weight of the shaped shell made from the nonwoven porous plastic material is between 50 to 300 grams per square meter.

In some embodiments of the method for making the decorative shaped infuser, the nonwoven porous plastic material is made of polyvinyl chloride (PVC), polyethylene terephthalate (PET), polypropylene (PP), polystyrene (PS), or polylactic acid (PLA).

In some embodiments of the method for making the decorative shaped infuser, the shape of the decorative shaped infuser is a 3D geometric shape, an animal, a person, a 3D place, or a thing, or combinations thereof.

### BRIEF DESCRIPTION OF THE DRAWINGS

To assist those of ordinary skill in the relevant art in understanding the subject matter hereof, reference is made to the appended drawings, in which like reference numerals refer to similar elements.
Fig. 1 is a schematic perspective view of a decorative shaped infuser, according to an example embodiment.
Fig. 2A is a flow chart illustrating Step (210) to Step (270) of a manufacturing method of a decorative shaped infuser, according to an example embodiment.
Fig. 2B is a flow chart illustrating Step (280) to Step (305C) of the manufacturing method of the decorative shaped infuser of Fig. 2A, according to an example embodiment.
Fig. 3A is a schematic perspective view of the decorative shaped infuser following Step (210) to Step (240) of the manufacturing method of Fig. 2A, according to an example embodiment.
Fig. 3B is a schematic perspective view of the decorative shaped infuser following Step (250) to Step (270) of the manufacturing method of Fig. 2A, according to an example embodiment.
Fig. 3C is a schematic perspective view of the decorative shaped infuser following Step (280) to Step (305C) of the manufacturing method of Fig. 2A, according to an example embodiment.

It should be understood that the drawings are not to scale and that the disclosed embodiments are sometimes illustrated diagrammatically and in partial views. In certain instances, details that are not necessary for an understanding of the disclosed method and apparatus, or that would render other details difficult to perceive may have been omitted. It should be understood that the present application is not limited to the particular embodiments illustrated herein.

### DETAILED DESCRIPTION

The present application is now described more fully hereinafter with reference to the accompanying drawings, in which embodiments are shown. Embodiments can, however, be embodied in many different forms and should not be construed as being limited to the various embodiments set forth herein; rather these embodiments are provided so that this disclosure will be thorough and complete and will fully convey the scope of example embodiments to those of ordinary skill in the relevant art.

Like numbers refer to like elements throughout. In the figures, the thickness of certain lines, layers, components, elements or features can be exaggerated for clarity. Where used, broken lines illustrate optional features or operations unless specified otherwise.

The terminology used herein is for the function of describing particular embodiments only and is not intended to be limiting the example embodiments. As used herein, the singular forms "a," "an" and "the" are intended to include plural forms as well, unless the context clearly indicates otherwise. It will be further understood that the terms "comprises" or "comprising," as used herein, encompass the notions of "including" and "having" and specify the presence of stated features, integers, steps, operations, elements components and/or groups or combinations thereof, but do not preclude the presence or addition of one or more other features, integers, steps, operations, elements, components and/or groups or combinations thereof.

The use of "for example" or "such as" to list illustrative examples does not limit to only the listed examples. Thus, "for example" or "such as" means "for example, but not limited to" or "such as, but not limited to" and encompasses other similar or equivalent examples.

As used herein, the term "and/or" includes any and all possible combinations or one or more of the associated listed items, as well as the lack of combinations when interpreted in the alternative ("or").

As used herein, the terms "embodiment" or "present embodiment" are non-limiting terms and not intended to refer to any single aspect of the particular embodiment but encompass all possible aspects as described in the specification and the claims.

Unless otherwise defined, all terms (including technical and scientific terms) used herein have the same meaning as knowingly understood by one of ordinary skill in the art to which example embodiments belong. It will be further understood that terms, such as those defined in knowingly used dictionaries, should be interpreted as having a meaning that is consistent with their meaning in the context of the specification and claims and should not be interpreted in an idealized or overly formal sense unless expressly so defined herein. Well-known functions or constructions can not be described in detail for brevity and/or clarity.

It will be understood that when an element is referred to as being "on," "assembled" to, "connected" to, "coupled" with, "contacting," etc., another element, it can be directly on, assembled to, connected to, coupled with and/or contacting the other element or intervening elements can also be present. In contrast, when an element is referred to as being, for example, "directly on," "directly assembled" to, "directly connected" to, "directly coupled" with or "directly contacting" another element, there are no intervening elements present. It will also be appreciated by those of ordinary skill in the relevant art that references to a structure or feature that is disposed "adjacent" another feature can have portions that overlap or underlie the adjacent feature.

Spatially relative terms, such as "under," "below," "lower," "over," "upper" and the like, can be used herein for ease of description to describe an element's or feature's relationship to another element's or feature's as illustrated in the figures. It will be understood that the spatially relative terms are intended to encompass different orientations of the device in use or operation in addition to the orientation depicted in the figures. For example, if the device in the figures is inverted, elements described as "under" or "beneath" other elements or features would then be oriented "over" the other elements or features. Thus the exemplary term "under" can encompass both an orientation of over and under. The device can otherwise be oriented (rotated 90 degrees or at other orientations) and the spatially relative descriptors used herein interpreted accordingly. Similarly, the terms "upwardly," "downwardly," "vertical," "horizontal" and the like are used herein for the function of explanation only, unless specifically indicated otherwise.

It will be understood that, although the terms first, second, etc., can be used herein to describe various elements, components, regions, layers and/or sections, these elements, components, regions, layers and/or sections should not be limited by these terms. Rather, these terms are only used to distinguish one element, component, region, layer and/or section, from another element, component, region, layer and/or section. Thus, a first element, component, region, layer or section discussed herein could be termed a second element, component, region, layer or section without departing from the teachings of the present application. The sequence of operations (or steps) is not limited to the order presented in the claims or figures unless specifically indicated otherwise.

Example embodiments as disclosed herein are directed to thermoformed decorative shaped infusers and manufacturing methods of the same. In an embodiment, a decorative shaped infuser comprising a shaped shell having a first shell portion comprising a first shell opening and a second shell portion comprising a second shell opening is provided. The first shell opening is assembled to the second shell opening defining a chamber. The chamber includes at least one consumable plant-based material, completely infusing and diffusing after being immersed in a consumable liquid. The first shell portion comprises at least one first attachment assembled thereto. The second shell portion comprises at least one moveable second attachment assembled thereto. A thickness of at least a portion of the at least one moveable second attachment is less than an average thickness of the shaped shell, whereby after being immersed in a consumable liquid, the at least a portion of the at least one moveable second attachment moves with liquid turbulence.

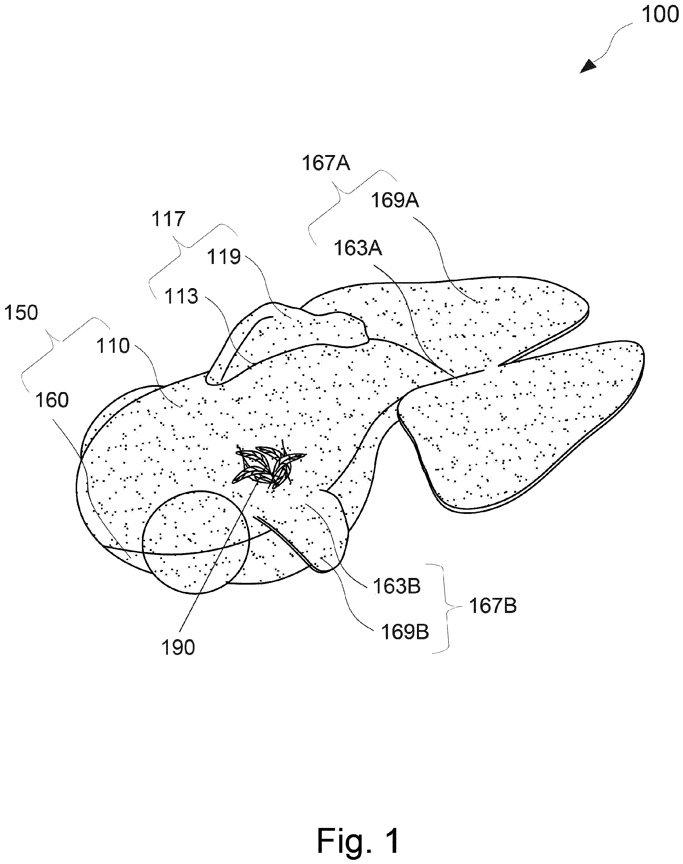

Fig. 1 is a schematic perspective view of a decorative shaped infuser, according to an example embodiment. Referring to Figs. 1, a decorative shaped infuser 100 comprising a shaped shell 150, made from a nonwoven porous plastic material, having a first shell portion 110 comprising a first shell opening 115 and a second shell portion 160 comprising a second shell opening 165 is provided. The first shell opening 115 is assembled to the second shell opening 165 defining a chamber 155 within the shaped shell 150. The chamber 155 includes at least one consumable plant-based material 190 and the at least one consumable plant-based material 190 completely infuses and diffuses after being immersed in a consumable liquid 101.

In some embodiments, the at least one consumable plant-based material 190 is made of loose whole-leaf tea leaves, whereby the loose whole-leaf tea leaves completely infuse via non-hindered unfurling thereof after being immersed in a consumable liquid 101. However, those of ordinary skill in the relevant art can readily appreciate that in alternative embodiments, the at least one consumable plant-based material 190 can be a material or materials other than loose whole-leaf tea leaves, depending upon the type of material and desired taste. In alternative embodiments, as an example and not to be limiting the at least one consumable plant-based material 190 can be made of a fruit, or herb, coffee grinds, or any combination thereof. As long as, when applicable, the at least one consumable plant-based material 190 can completely infuse via non-hindered unfurling thereof after being immersed in a consumable liquid 101 to thereafter diffuse.

In some embodiments, the consumable liquid 101 is boiled water and the temperature thereof is around 70°C to 95°C. However, those of ordinary skill in the relevant art can readily appreciate that in alternative embodiments, the temperature of the boiled water can be less than or greater than around 70°C to 95 °C, depending upon the type of material and desired taste. Also, those of ordinary skill in the relevant art can readily appreciate that liquids other than water can be employed in the embodiments. As an example and not to be limiting, flavored water or other liquids having additives added thereto. As long as the liquids are consumable and, when applicable, the at least one consumable plant-based material 190 can completely infuse via non-hindered unfurling thereof after being immersed in the consumable liquid 101 to thereafter diffuse.

In some embodiments, the first shell portion 110 comprises a first contact area 115 having an inner step portion 112 and a first outer edge 118 and the second shell portion 160 comprises a second contact area 165 having an inner ledge portion 162 and a second outer edge 168. The first contact area 115 is the perimeter encircling the first shell opening 115 of the first shell portion 110 and the second contact area 165 is the perimeter encircling the second shell opening 165 of the second shell portion 160. When assembled, the inner step portion 112 contacts and aligns flush with the inner ledge portion 162, and the first outer edge 118 contacts and aligns flush with the second outer edge 168. In some embodiments, the inner step portion 112 contacts and aligns flush with the inner ledge portion 162 for assembly, however, the embodiments are not limited thereto. Those of ordinary skill in the relevant art can readily appreciate that that in alternative embodiments other designs can be employed for attachment of the first contact area 115 of the first shell portion 110 to the second contact area 165 of the second shell portion 160. As an example and not to be limiting, the perimeter of the first contact area 115 can have a V-shaped protrusion or U-shaped protrusion and the perimeter of the second contact area 165 can have a corresponding V-shaped indention or U-shaped indention, respectively, for attachment of the first contact area 115 to the second contact area 165. As long as the V-shaped protrusion or U-shaped protrusion contacts and aligns flush with the V-shaped indention or U-shaped indention, respectively, and the first outer edge 118 contacts and aligns flush with the second outer edge 168.

In some embodiments, the first shell portion 110 comprises at least one first attachment 117 assembled thereto via thermocompression melt cutting, ultrasonic melt cutting, high-frequency plastic melt cutting, or snap fit attachment. The at least one first attachment 117 is made of nonwoven porous plastic material and comprises a first attachment area 113 and a first free area 119 opposite the first attachment area 113. The first attachment area 113 contacts the first shell portion 110. However, those of ordinary skill in the relevant art can readily appreciate that in alternative embodiments, the first shell portion 110 comprises more than one first attachment 117 assembled thereto, depending upon the decoration of the decorative shaped infuser 100, and the embodiments are not limited thereto.

Those of ordinary skill in the relevant art can also readily appreciate that in alternative embodiments, the at least one first attachment 117 can be integrally formed with the first shell portion 110. As long as the at least one first attachment 117 is made of nonwoven porous plastic material and comprises a first attachment area 113 and a first free area 119 opposite the first attachment area 113.

In some embodiments, a string or string-like material having a handle or label on a far end thereof may be attached to the first free area 119 of the at least one first attachment 117 on a near end opposite the handle or label for handling, advertising, or labeling of the decorative shaped infuser 100. Those of ordinary skill in the relevant art can readily appreciate however, that in alternative embodiments, other materials, extensions or hook-like materials may be attached to the first free area 119 of the at least one first attachment 117 for handling, advertising, or labeling, as long as, when applicable, the at least one consumable plant-based material 190 can completely infuse via non-hindered unfurling thereof after being immersed in a consumable liquid, the movement of the at least a portion of the at least one moveable second attachment of the second shell portion with consumable liquid turbulence is not hundred, bleached materials or any metal is not used ,and the material used does not noticeably influence taste. By noticeably influence taste, it is meant that an average person or animal will not recognize a taste difference.

In some embodiments, the second shell portion 160 comprises at least one moveable second attachment 167 assembled thereto via thermocompression melt cutting, ultrasonic melt cutting, high-frequency plastic melt cutting, or snap fit attachment. The at least one moveable second attachment 167 is made of nonwoven porous plastic material and comprises a second attachment area 163 and second free area 169 opposite the second attachment area 163. The second attachment area 163 contacts the second shell portion 160 and a thickness of at least a portion of the at least one moveable second attachment 167 is less than an average thickness of the shaped shell 150, whereby after being immersed in a consumable liquid 101, the at least a portion of the at least one moveable second attachment 167 moves with liquid turbulence. However, those of ordinary skill in the relevant art can readily appreciate that in alternative embodiments, the first shell portion 110 comprises more than one moveable second attachment 167, and the embodiments are not limited thereto. As an example, and not to be limiting, the first shell portion 110 comprises more than one moveable second attachment 167A, 167B, 167C (not shown) comprising more than one second attachment area 163A, 163B, 163C (not shown) and more than one second free area 169A, 169B, 169C (not shown) opposite the more than one second attachment area 163A, 163B, 163C (not shown), respectively. As long as at least a portion of one of the more than one moveable second attachment 167A, 167B, 167C (not shown) is less than an average thickness of the shaped shell 150, whereby after being immersed in a consumable liquid 101, the at least a portion of the at least one of the more than one moveable second attachment 167A, 167B, 167C (not shown) moves with liquid turbulence.

Those of ordinary skill in the relevant art can also readily appreciate that in alternative embodiments, the at least one moveable second attachment 167 can be integrally formed with the second shell portion 160 and, depending on the average thickness of the shaped shell 150, the thickness of the at least a portion of one of the more than one moveable second attachment 167A, 167B, 167C (not shown) can be equal to the average thickness of the shaped shell 150. As long as after being immersed in a consumable liquid 101, the at least a portion of the at least one of the more than one moveable second attachment 167A, 167B, 167C (not shown) moves with liquid turbulence.

In some embodiments, the weight of the shaped shell 150 made from the nonwoven porous plastic material is between 50 to 300 grams per square meter. However, those of ordinary skill in the art can readily appreciate that in alternative embodiments, the weight of the shaped shell 150 made from the nonwoven porous plastic material can be less than or more than between 50 to 300 grams per square meter.

In some embodiments, the nonwoven porous plastic material is made of polyvinyl chloride (PVC), polyethylene terephthalate (PET), polypropylene (PP), polystyrene (PS), or polylactic acid (PLA).

In some embodiments, the shape of the decorative shaped infuser 100 is a fish. As an example, and not to be limiting, the more than one moveable second attachment 167A, 167B, 167C (not shown) comprising more than one second attachment area 163A, 163B, 163C (not shown) and more than one second free area 169A, 169B, 169C (not shown) opposite the more than one second attachment area 163A, 163B, 163C (not shown), respectively, are fins of the fish. In some embodiments, the thickness of the fins decrease from the more than one second attachment area 163A, 163B, 163C (not shown) to the more than one second free area 169A, 169B, 169C (not shown). Thus, after being immersed in a consumable liquid 101, not only does the movement of the fins with liquid turbulence contribute to a life-like representation of the fish, the movement thereof also contributes to the diffusion of flavors and/or nutrients of at least one consumable plant-based material 190 throughout a container of the consumable liquid 101, whereby two distinct functions are served, a life-like representation of the decorative shaped infuser 100 and a contribution to the diffusion of flavors via oscillatory motion. Those of ordinary skill in the art can readily appreciate that in alternative embodiments, the thickness of the fins may not decrease from the more than one second attachment area 163A, 163B, 163C (not shown) to the more than one second free area 169A, 169B, 169C (not shown), but simply be a thinner longitudinal area near to the more than one second attachment area 163A, 163B, 163C (not shown), at around a same distance away from the point of contact between the more than one second attachment area 163A, 163B, 163C (not shown) and the second shell portion 160 and the embodiments are not limited thereto. As long as, after being immersed in a consumable liquid 101, the fins are able to move with liquid turbulence and can contribute to a life-like representation of the fish, and the movement thereof can also contribute to the diffusion of flavors and/or nutrients of at least one consumable plant-based material 190 throughout a container of the consumable liquid 101, whereby the two distinct functions can be served, a life-like representation of the decorative shaped infuser 100 and a contribution to the diffusion of flavors via oscillatory motion. Additionally, those of ordinary skill in the art can readily appreciate that in alternative embodiments, the shape of the decorative shaped infuser 100 can be something other than a fish. As an example and not to be limiting, the shape of the decorative shaped infuser 100 can be a 3D geometric shape, an animal, a person, a 3D place, or a thing, or combinations thereof.

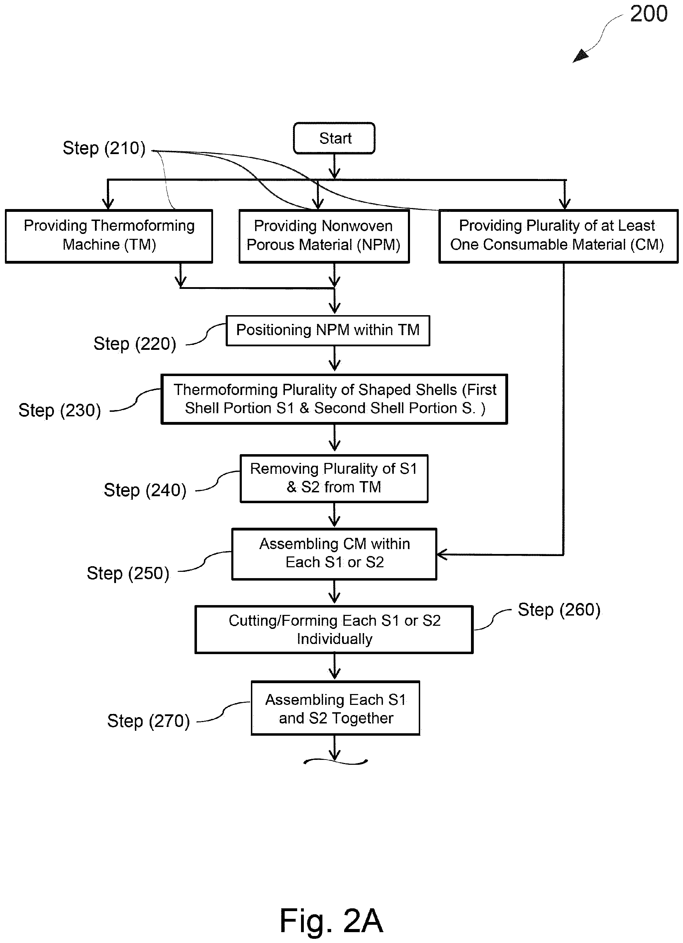

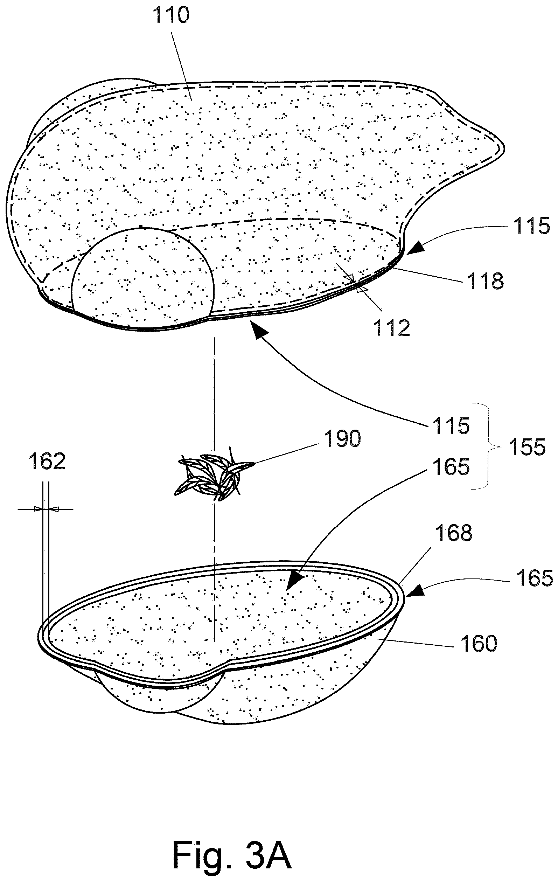

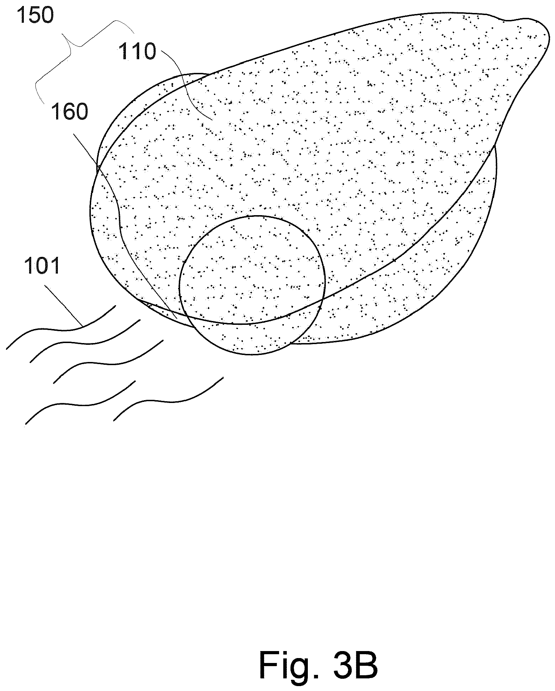

Fig. 2A is a flow chart illustrating Step (210) to Step (270) of a manufacturing method of a decorative shaped infuser 100, according to an example embodiment. Fig. 3A is a schematic perspective view of the decorative shaped infuser 100 following Step (210) to Step (240) of the manufacturing method of Fig. 2A, according to an example embodiment. Fig. 3B is a schematic perspective view of the decorative shaped infuser 100 following Step (250) to Step (270) of the manufacturing method of Fig. 2A, according to an example embodiment. Referring to Figs. 2A, 3A, and 3B, and referring to Fig. 1, a method 200 for making a decorative shaped infuser 100 comprising a shaped shell 150, made from a nonwoven porous plastic material, having a first shell portion 110 comprising a first shell opening 115 and a second shell portion 160 comprising a second shell opening 165 is provided. The method comprises the steps of, Step (210): providing a thermoforming machine, a plurality of decorative shaped infuser 100 molds for assembly with the thermoforming machine and forming a plurality of shaped shells 150 of the decorative shaped infuser 100, each having a first shell portion 110 comprising a first shell opening 115 and a second shell portion 160 comprising a second shell opening 165, whereby a chamber 155 is defined within each plurality of shaped shells 150, nonwoven porous plastic material, and a plurality of at least one consumable plant-based material 190. Following, Step (220): positioning the nonwoven porous plastic material within the thermoforming machine for thermoforming each of the plurality of first shell portions 110 and second shell portions 160 of the plurality of shaped shells 150. Next, Step (230): thermoforming each of the plurality of first shell portions 110 and second shell portions 160 and Step (240): removing each of the plurality of first shell portions 110 and second shell portions 160 from the thermoforming machine. Also, Step (250): assembling the plurality of at least one consumable plant-based material 190 within each of the plurality of first shell portions 110 and second shell portions 160 and Step (260): cutting and forming each of the plurality of first shell portions 110 and second shell portions 160 into individual pieces. Additionally, Step (270): assembling each of the plurality of first shell portions 110 and second shell portions 160 having the at least one consumable plant-based material 190 therein together via thermocompression melt cutting, ultrasonic melt cutting, or high-frequency plastic melt cutting.

In some embodiments of the method for making the decorative shaped infuser 100, the first shell portion 110 comprises a first contact area 115 having an inner step portion 112 and a first outer edge 118 and the second shell portion 160 comprises a second contact area 165 having an inner ledge portion 162 and a second outer edge 168, whereby when assembled, the inner step portion 112 contacts and aligns flush with the inner ledge portion 162, and the first outer edge 118 contacts and aligns flush with the second outer edge 168.

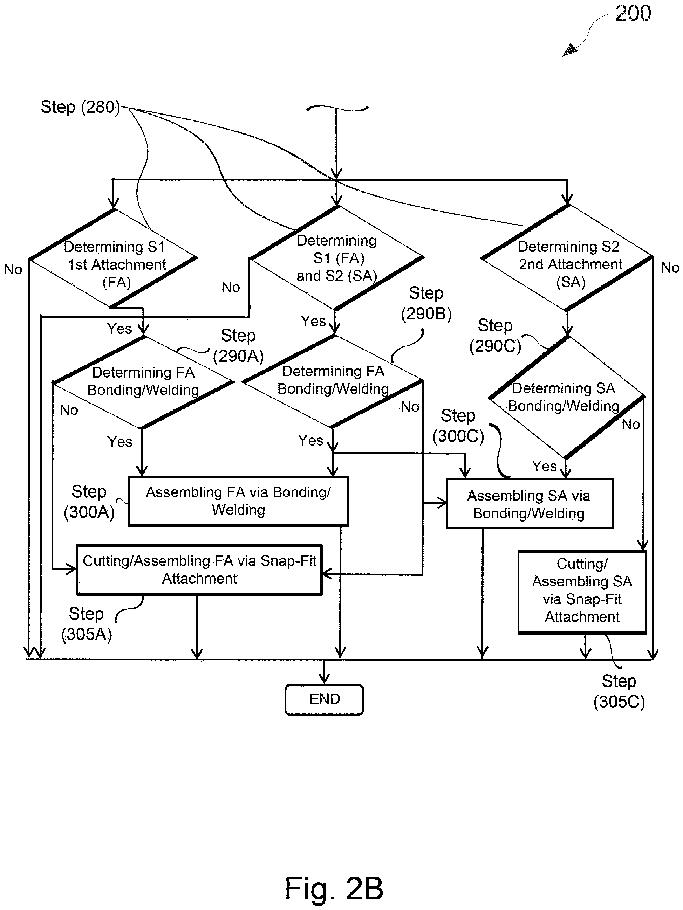

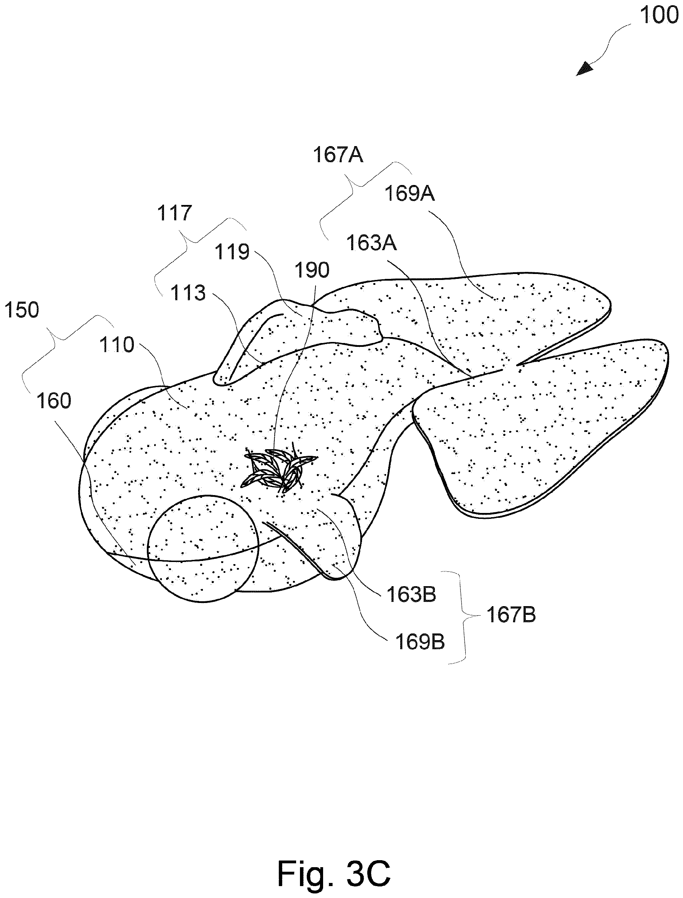

Fig. 2B is a flow chart illustrating Step (280) to Step (305C) of the manufacturing method of the decorative shaped infuser 100 of Fig. 2A, according to an example embodiment. Fig. 3C is a schematic perspective view of the decorative shaped infuser 100 following Step (280) to Step (305C) of the manufacturing method of Fig. 2A, according to an example embodiment. Referring to Figs. 2B and 3C, and referring to Fig. 1, 2A, 3A, and 3B, in some embodiments, the method for making the decorative shaped infuser 100 further comprises the steps of, Step (280): determining whether: S1: the first shell portion 110 comprises at least one first attachment 117 to be assembled thereto; or S1 & S2: both the first shell portion 110 comprises at least one first attachment 117 to be assembled thereto and the second shell portion 160 comprises at least one moveable second attachment 167 to be assembled thereto; or S2: the second shell portion 160 comprises at least one moveable second attachment 167 to be assembled thereto. If S1, performing Step (290A), if no, ending the method, or if S1 & S2, performing Step (290B), if no, ending the method, or if S3, performing Step (290C), if no, ending the method. Step (290A) comprises: determining whether assembly of the at least one first attachment 117 to the first shell portion 110 is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300A), if no, via snap fit attachment, performing Step (305B). Step (290B) comprises: determining whether assembly of the at least one first attachment 117 to the first shell portion 110 is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300A) and Step (300C), if no, via snap fit attachment, performing Step (305A) and Step (300C). Step (290C) comprises: determining whether assembly of the at least one moveable second attachment 167 to the second shell portion 160 is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300C), if no, via snap fit attachment, performing Step (305C). Step (300A) comprises: assembling the at least one first attachment 117 to the first shell portion 110 via thermocompression melt cutting, ultrasonic melt cutting, or high-frequency plastic melt cutting, wherein the at least one first attachment 117 is made of nonwoven porous plastic material and comprises a first attachment area 113 and a first free area 119 opposite the first attachment area 113, the first attachment area 113 contacts the first shell portion 110. Step (300B) comprises: assembling the at least one first attachment 117 to the first shell portion 110 and assembling the at least one moveable second attachment 167 to the second shell portion 160 via thermocompression melt cutting, ultrasonic melt cutting, or high-frequency plastic melt cutting, wherein the at least one first attachment 117 is made of nonwoven porous plastic material and comprises a first attachment area 113 and a first free area 119 opposite the first attachment area 113, the first attachment area 113 contacts the first shell portion 110 and the at least one moveable second attachment 167 is made of nonwoven porous plastic material and comprises a second attachment area 163 and second free area 169 opposite the second attachment area 163, the second attachment area 163 contacts the second shell portion 160 and a thickness of at least a portion of the at least one moveable second attachment 167 is less than an average thickness of the shaped shell 150, whereby after being immersed in a consumable liquid 101, the at least a portion of the at least one moveable second attachment 167 moves with liquid turbulence. Step (300C) comprises: assembling the at least one moveable second attachment 167 to the second shell portion 160 via thermocompression melt cutting, ultrasonic melt cutting, or high-frequency plastic melt cutting, the at least one moveable second attachment 167 is made of nonwoven porous plastic material and comprises a second attachment area 163 and second free area 169 opposite the second attachment area 163, the second attachment area 163 contacts the second shell portion 160 and a thickness of at least a portion of the at least one moveable second attachment 167 is less than an average thickness of the shaped shell 150, whereby after being immersed in a consumable liquid 101, the at least a portion of the at least one moveable second attachment 167 moves with liquid turbulence. Step (305A) comprises: cutting and assembling the at least one first attachment 117 to the first shell portion 110 via snap fit attachment, wherein the at least one first attachment 117 is made of nonwoven porous plastic material and comprises a first attachment area 113 and a first free area 119 opposite the first attachment area 113, the first attachment area 113 contacts the first shell portion 110. Step (305C) comprises: cutting and assembling the at least one moveable second attachment 167 to the second shell portion 160 via snap fit attachment, the at least one moveable second attachment 167 is made of nonwoven porous plastic material and comprises a second attachment area 163 and second free area 169 opposite the second attachment area 163, the second attachment area 163 contacts the second shell portion 160 and a thickness of at least a portion of the at least one moveable second attachment 167 is less than an average thickness of the shaped shell 150, whereby after being immersed in a consumable liquid 101, the at least a portion of the at least one moveable second attachment 167 moves with liquid turbulence.

In some embodiments of the method for making the decorative shaped infuser 100, the at least one consumable plant-based material 190 is made of loose whole-leaf tea leaves, whereby the loose whole-leaf tea leaves completely infuse via non-hindered unfurling thereof after being immersed in a consumable liquid 101. In some embodiments of the method for making the decorative shaped infuser 100, the at least one consumable plant-based material 190 is made of a fruit, or herb, coffee grinds, or any combination thereof.

In some embodiments of the method for making the decorative shaped infuser 100, the weight of the shaped shell 150 made from the nonwoven porous plastic material is between 50 to 300 grams per square meter.

In some embodiments of the method for making the decorative shaped infuser 100, the nonwoven porous plastic material is made of polyvinyl chloride (PVC), polyethylene terephthalate (PET), polypropylene (PP), polystyrene (PS), or polylactic acid (PLA).

In some embodiments of the method for making the decorative shaped infuser 100, the shape of the decorative shaped infuser 100 is a 3D geometric shape, an animal, a person, a 3D place, or a thing, or combinations thereof.

Those of ordinary skill in the relevant art can readily appreciate that in alternative embodiments, further heat treatment processes can be employed throughout the manufacturing method of the decorative shaped infuser, and the embodiments are not limited to those described. Additionally, those skilled in the relevant art will appreciate that additional steps can be added to the process in order to incorporate additional features into the finished product. Also, the steps can be altered depending upon different requirements.

In the embodiments, decorative shaped infusers, comprising a shaped shell having a first shell portion comprising a first shell opening and a second shell portion comprising a second shell opening and methods for manufacturing the same are provided. The first shell opening is assembled to the second shell opening defining a chamber. The chamber includes at least one consumable plant-based material therein. The shape and size of the chamber in relation to the at least one consumable plant-based material, allows the at least one consumable plant-based material, such as loose whole-leaf tea leaves, to completely infuse via non-hindered unfurling thereof after being immersed in a consumable liquid. Thus, most of the flavor and nutrients of the loose whole-leaf tea leaves are released during the steeping process. Furthermore, the movement of the at least a portion of the at least one moveable second attachment of the second shell portion with consumable liquid turbulence contributes to the diffusion of the flavors and nutrients of the loose whole-leaf tea leaves throughout a container of the consumable liquid via the thickness of the at least a portion of the at least one moveable second attachment being less than an average thickness of the shaped shell. Also, bleached filter paper tea bags and any metal related to tea bags or the tea steeping process are avoided via the nonwoven porous plastic material, thus mitigating influence thereof to taste. Additionally, via the thermoformed manufacturing methods of the decorative shaped infusers, elaborate shapes can be manufacturing with simple and minimal processing steps.

It is to be understood that the appended claims are not limited to express the particular elements, devices, or apparatuses described in the detailed description, which can vary between particular embodiments which fall within the scope of the appended claims. With respect to any Markush groups relied upon herein for describing particular features or aspects of various embodiments, different, special, and/or unexpected results can be obtained from each member of the respective Markush group independent from all other Markush members. Each member of a Markush group can be relied upon individually and or in combination and provides adequate support for specific embodiments within the scope of the appended claims.

Further, any ranges and subranges relied upon in describing various embodiments of the present disclosure independently and collectively fall within the scope of the appended claims, and are understood to describe and contemplate all ranges including whole and/or fractional values therein, even if such values are not expressly written herein. Those skilled in the relevant art readily recognizes that the enumerated ranges and subranges sufficiently describe and enable various embodiments of the present disclosure, and such ranges and subranges can be further delineated into relevant halves, thirds, quarters, fifths, and so on. As just one example, a range "of from 0.1 to 0.9" can be further delineated into a lower third, i.e., from 0.1 to 0.3, a third, i.e., from 0.4 to 0.6, and an upper third, i.e., from 0.7 to 0.9, which individually and collectively are within the scope of the appended claims, and can be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 7" inherently includes a subrange of from at least 7 to 35, a subrange of from at least 7 to 25, a subrange of from 25 to 35, and so on, and each subrange can be relied upon individually and/or collectively and provides adequate support for specific embodiments within the scope of the appended claims. Finally, an individual number within a disclosed range can be relied upon and provides adequate support for specific embodiments within the scope of the appended claims. For example, a range "of from 1 to 9" includes various individual integers, such as 3, as well as individual numbers including a decimal point (or fraction), such as 4.1, which can be relied upon and provide adequate support for specific embodiments within the scope of the appended claims.

The present application has been described herein in an illustrative manner, and it is to be understood that the terminology which has been used is intended to be in the nature of words of description rather than of limitation. Many modifications and variations of the present embodiments are possible in light of the above teachings. The present application can be practiced otherwise than as specifically described within the scope of the appended claims. The subject matter of all combinations of independent and dependent claims, both single and multiple dependent, is herein expressly contemplated.

## Claims

1. A decorative shaped infuser, comprising:
a shaped shell having a first shell portion comprising a first shell opening and a second shell portion comprising a second shell opening, whereby the first shell opening is assembled to the second shell opening defining a chamber within the shaped shell,
wherein the chamber includes at least one consumable plant-based material and the at least one consumable plant-based material completely infuses and diffuses after being immersed in a consumable liquid, and
wherein the shaped shell is made from a nonwoven porous plastic material.

2. The decorative shaped infuser of claim 1, wherein the first shell portion comprises a first contact area having an inner step portion and a first outer edge and the second shell portion comprises a second contact area having an inner ledge portion and a second outer edge, whereby when assembled, the inner step portion contacts and aligns flush with the inner ledge portion, and the first outer edge contacts and aligns flush with the second outer edge.

3. The decorative shaped infuser of claim 1, wherein the first shell portion comprises at least one first attachment assembled thereto via thermocompression melt cutting, ultrasonic melt cutting, high-frequency plastic melt cutting, or snap fit attachment, the at least one first attachment is made of nonwoven porous plastic material and comprises a first attachment area and a first free area opposite the first attachment area, the first attachment area contacts the first shell portion.

4. The decorative shaped infuser of claim 1, wherein the second shell portion comprises at least one moveable second attachment assembled thereto via thermocompression melt cutting, ultrasonic melt cutting, high-frequency plastic melt cutting, or snap fit attachment, the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence.

5. The decorative shaped infuser of claim 1, wherein the at least one consumable plant-based material is made of loose whole-leaf tea leaves, whereby the loose whole-leaf tea leaves completely infuse via non-hindered unfurling thereof after being immersed in a consumable liquid.

6. The decorative shaped infuser of claim 1, wherein the at least one consumable plant-based material is made of a fruit, or herb, coffee grinds, or any combination thereof.

7. The decorative shaped infuser of claim 1, wherein the weight of the shaped shell made from the nonwoven porous plastic material is between 50 to 300 grams per square meter.

8. The decorative shaped infuser of claim 4, wherein the shape of the decorative shaped infuser is a fish.

9. The decorative shaped infuser of claim 4, wherein the shape of the decorative shaped infuser is a 3D geometric shape, an animal, a person, a 3D place, or a thing, or combinations thereof.

10. A method for making a decorative shaped infuser, comprising the steps of:
Step (210): providing a thermoforming machine, a plurality of decorative shaped infuser molds for assembly with the thermoforming machine and forming a plurality of shaped shells of the decorative shaped infuser, each having a first shell portion comprising a first shell opening and a second shell portion comprising a second shell opening, whereby a chamber is defined within each plurality of shaped shells, nonwoven porous plastic material, and a plurality of at least one consumable plant-based material;
Step (220): positioning the nonwoven porous plastic material within the thermoforming machine for thermoforming each of the plurality of first shell portions and second shell portions of the plurality of shaped shells;
Step (230): thermoforming each of the plurality of first shell portions and second shell portions;
Step (240): removing each of the plurality of first shell portions and second shell portions from the thermoforming machine;
Step (250): assembling the plurality of at least one consumable plant-based material within each of the plurality of first shell portions and second shell portions;
Step (260): cutting and forming each of the plurality of first shell portions and second shell portions into individual pieces; and
Step (270): assembling each of the plurality of first shell portions and second shell portions having the at least one consumable plant-based material therein together via thermocompression melt cutting, ultrasonic melt cutting, or high-frequency plastic melt cutting.

11. The method for making the decorative shaped infuser of claim 10, wherein the first shell portion comprises a first contact area having an inner step portion and a first outer edge and the second shell portion comprises a second contact area having an inner ledge portion and a second outer edge, whereby when assembled, the inner step portion contacts and aligns flush with the inner ledge portion, and the first outer edge contacts and aligns flush with the second outer edge.

12. The method for making the decorative shaped infuser of claim 10, further comprising the steps of:
Step (280): determining whether:
S1: the first shell portion comprises at least one first attachment to be assembled thereto; or
S1 & S2: both the first shell portion comprises at least one first attachment to be assembled thereto and the second shell portion comprises at least one moveable second attachment to be assembled thereto; or
S2: the second shell portion comprises at least one moveable second attachment to be assembled thereto,
if S1, performing Step (290A), if no, ending the method, or if S1 & S2, performing Step (290B), if no, ending the method, or if S3, performing Step (290C), if no, ending the method;
Step (290A): determining whether assembly of the at least one first attachment to the first shell portion is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300A), if no, via snap fit attachment, performing Step (305B);
Step (290B): determining whether assembly of the at least one first attachment to the first shell portion is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300A) and Step (300C), if no, via snap fit attachment, performing Step (305A) and Step (300C);
Step (290C): determining whether assembly of the at least one moveable second attachment to the second shell portion is via thermocompression melt cutting, ultrasonic melt cutting, or high-frequency plastic melt cutting or snap fit attachment, if yes, via thermocompression melt cutting, ultrasonic melt cutting, or high-frequency plastic melt cutting, performing Step (300C), if no, via snap fit attachment, performing Step (305C);
Step (300A): assembling the at least one first attachment to the first shell portion via thermocompression melt cutting, ultrasonic melt cutting, or high-frequency plastic melt cutting, wherein the at least one first attachment is made of nonwoven porous plastic material and comprises a first attachment area and a first free area opposite the first attachment area, the first attachment area contacts the first shell portion;
Step (300B): assembling the at least one first attachment to the first shell portion and assembling the at least one moveable second attachment to the second shell portion via thermocompression melt cutting, ultrasonic melt cutting, or high-frequency plastic melt cutting, wherein the at least one first attachment is made of nonwoven porous plastic material and comprises a first attachment area and a first free area opposite the first attachment area, the first attachment area contacts the first shell portion and the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence;
Step (300C): assembling the at least one moveable second attachment to the second shell portion via thermocompression melt cutting, ultrasonic melt cutting, or high-frequency plastic melt cutting, the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence;
Step (305A): cutting and assembling the at least one first attachment to the first shell portion via snap fit attachment, wherein the at least one first attachment is made of nonwoven porous plastic material and comprises a first attachment area and a first free area opposite the first attachment area, the first attachment area contacts the first shell portion; and
Step (305C): cutting and assembling the at least one moveable second attachment to the second shell portion via snap fit attachment, the at least one moveable second attachment is made of nonwoven porous plastic material and comprises a second attachment area and second free area opposite the second attachment area, the second attachment area contacts the second shell portion and a thickness of at least a portion of the at least one moveable second attachment is less than an average thickness of the shaped shell, whereby after being immersed in a consumable liquid, the at least a portion of the at least one moveable second attachment moves with liquid turbulence.

13. The method for making the decorative shaped infuser of claim 10, wherein the at least one consumable plant-based material is made of loose whole-leaf tea leaves, whereby the loose whole-leaf tea leaves completely infuse via non-hindered unfurling thereof after being immersed in a consumable liquid.

14. The method for making the decorative shaped infuser of claim 10, wherein the at least one consumable plant-based material is made of a fruit, or herb, coffee grinds, or any combination thereof.

15. The method for making the decorative shaped infuser of claim 10, wherein the weight of the shaped shell made from the nonwoven porous plastic material is between 50 to 300 grams per square meter.
